Europäisches Patentamt

European Patent Office

Office européen des brevets

(19)

(11) **EP 1 048 872 B1**

## (12) EUROPÄISCHE PATENTSCHRIFT

(45) Veröffentlichungstag und Bekanntmachung des Hinweises auf die Patenterteilung:
**12.11.2003 Patentblatt 2003/46**

(51) Int Cl.⁷: **F16D 65/12**

(21) Anmeldenummer: **00105293.5**

(22) Anmeldetag: **06.04.2000**

(54) **Verfahren zur Auslegung einer Scheibenbremse**

Method of laying out a brake disc

Procédé de dessiner un frein à disque

(84) Benannte Vertragsstaaten:
**AT DE FR GB IT**

(30) Priorität: **29.04.1999 DE 19919437**
**03.09.1999 DE 19942040**

(43) Veröffentlichungstag der Anmeldung:
**02.11.2000 Patentblatt 2000/44**

(73) Patentinhaber: **Dr.Ing. h.c.F. Porsche Aktiengesellschaft**
**70435 Stuttgart (DE)**

(72) Erfinder: **Aydt, Günter**
**71522 Backnang (DE)**

(56) Entgegenhaltungen:
**DE-A- 2 458 048         DE-A- 4 041 010**
**DE-A- 19 507 102        JP-U- 62 097 329**
**US-A- 5 139 117         US-A- 5 417 313**
**US-A- 5 735 366**

- **PATENT ABSTRACTS OF JAPAN vol. 1998, no. 08, 30. Juni 1998 (1998-06-30) & JP 10 073136 A (AISIN SEIKI CO LTD;AISIN TAKAOKA LTD), 17. März 1998 (1998-03-17)**
- **PATENT ABSTRACTS OF JAPAN vol. 1999, no. 10, 31. August 1999 (1999-08-31) & JP 11 141585 A (AISIN SEIKI CO LTD;AISIN TAKAOKA LTD), 25. Mai 1999 (1999-05-25)**

**Beschreibung**

Die Erfindung bezieht sich auf ein Verfahren zur Auslegung einer Scheibenbremse nach dem Oberbegriff des Anspruchs 1.

Aus der DE 195 07 102 A1 ist eine Scheibenbremse bekannt, bei der die Bremsscheibe so abgestimmt wird, daß Quietschgeräusche beim Bremsvorgang über die anliegenden Bremsbelege aufgehoben bzw. vermindert werden. Dies erfolgt indem ein bestimmtes Verhältnis von Bremsbelaglänge zum Bremsscheibenumfang hergestellt wird. Desweiteren ist aus der DE 40 41 010 eine Vorrichtung zum Verhindern des Quietschens einer Scheibenbremse bekannt, bei der die Reibbeläge aus einem halbmetallischen oder asbestfreiem Material auf einem Scheibenrotor bzw. auf eine Bremsscheibe zum Ausführen eines Bremsens gedrückt werden. Der Rotor ist derart unterteilt, daß die Resonanzfrequenz zweiter Ordnung der Längsschwingung des Rotors größer als 15 kHz ist. Die Unterteilung des Scheibenrotors erfolgt über Schlitze, die innen- und außenseitig des Rotors angeordnet sind.

Aus dem japanischen Gebrauchsmuster Nr. JP62-97329 U ist ein Bremsscheiben-Rotor bekannt geworden, der eine Mehrzahl radialer Nuten aufweist, die sich von einem inneren Umfang zu einem äußeren Umfang erstrecken. Die Nuten sind zu beiden Seiten des Rotors jeweils in gleichem Winkelabstand zueinander angeordnet. Die DE 196 38 187 A1 zeigt hiervon ausgehend einen Bremsscheiben-Rotor, bei dem die radiale Nuten auf der ersten Seite des Rotors in einem zur zweiten Seite unterschiedlichen Winkelabstand zueinander angeordnet sind. Hierdurch werden auf den beiden Seiten des Rotors unterschiedliche Vibrationen erzeugt, die sich gegenseitig stören und auf diese Weise die Entstehung einer stehenden Welle verhindern.

Schließlich ist aus der US 5,139,117 ein gedämpfter Bremsscheibe-Rotor bekannt geworden, der zwischen zwei Reibringen einen Zwischenring aufweist, so dass durch radial verlaufende Rippen jeweils Kühlkanäle zwischen dem Zwischenring und einem der Reibringe gebildet sind. Zur Dämpfung der Eigenschwingung ist ein Schlitz in den Bremsscheiben-Rotor eingebracht, der zumindest einen der Reibringe und den Zwischen ring durchdringt und in einem Kühlkanal endet.

Aufgabe der Erfindung ist es, ein Verfahren zur Auslegung einer Scheibenbremse zu schaffen, wobei das Auftreten von Quietschgeräuschen durch eine Verstimmung der Eigenfrequenzform des Bremssystems erfolgt.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß insbesondere bestehende Bremsen bei einem Quietschverhalten in ihrem Eigenschwingungsverhalten so verstimmt werden können, daß ein Bremsenquietschen vermindert bzw. aufgehoben wird.

Dies wird nach der Erfindung im wesentlichen dadurch erreicht, indem der Reibring einer Voll-Bremsscheibe bzw. die Reibringe einer innenbelüfteten Bremsscheibe in mindestens einem Flächenbereich der Reibfläche eine örtliche Schwächung des Widerstandsmoments "W" derart aufweist, daß eine verstimmende Eigen-Schwingung erzielbar ist, die ungleich der Eigenschwingungsform der Bremsscheibe mit den Schwingungs-Knoten "W" ist.

Die örtliche Schwächung bzw. die Schwächungen des Widerstandsmoments in einem oder beiden Reibringen der Bremsscheibe besteht vorzugsweise aus einem oder mehreren Schlitzen, welche den oder die Reibringe durchtrennen und sich vom Bremsscheibenzentrum bis etwa zum Außenrand der Reibringe erstrecken.

Zur Erzielung der örtlich reduzierten Widerstandsmomente in einem oder mehreren Bereichen der Reibringe der Bremsscheibe wird eine hieraus resultierende Verstimmung der Eigenschwingungsform der Bremsscheibe durch entsprechend angeordnete und dimensionierte Schlitze in beiden Reibringen oder in einem Reibring vorgesehen.

Nach einer Ausführung der Erfindung können die Schlitze sowohl zwischen den Rippen der Kühlkanäle der Bremsscheibe als auch auf den Rippen angeordnet sein. Desweiteren können die Schlitze im äußeren Reibring oder im inneren Reibring oder in beiden Reibringen vorgesehen sein. Ferner sind die Schlitze auch in abwechselnder Folge im äußeren und im inneren Reibring vorzusehen.

Da die Schlitze die Reibringe jeweils durchtrennen, können besondere Anbindungen über beispielsweise dicht nebeneinanderliegende Rippen, wie beispielsweise Doppelrippen erforderlich werden. Bei gegenüberliegenden Schlitzen in den Bremsringen sind die nebeneinanderliegenden Rippen über einen Quersteg miteinander verbunden.

Nach der Erfindung ist der Verlauf der Schlitze in den Reibringen an den Verlauf der Rippen der Kühlkanäle anpaßbar, so daß radiale und schrägverlaufende Schlitze verwendet werden, die sowohl auf der Rippe als auch zwischen den Rippen verlaufen. Auch entgegengesetzt schräg zu den Rippen angeordnete und die Rippen überkreuzende Schlitze sind möglich.

Wenn der Schlitz in der Rippe des Kühlkanals angeordnet ist, wird meist eine breite Rippe erforderlich, damit die Rippe noch eine genügende Steifigkeit erbringt. Die Anzahl der gegenüber den anderen Rippen breiteren Rippe wird entsprechend den Erfordernissen zum Verhindern eines Bremsenquietschens gewählt. So kann eine breitere Rippe oder aber es können auch mehrere breitere Rippen erforderlich sein. Die Breite des Schlitzes soll möglichst schmal sein, damit keine unnötigen Rubbeleffekte die Bremsscheibe belasten. Aus diesem Grund ist es auch von Vorteil, wenn der Schlitz in der Reibfläche der Bremsscheibe Anschrägungen aufweist.

In jedem Fall kann durch ein örtlich reduziertes Widerstandsmoment an den Bremsscheiben bzw. in den Reibringen eine Verstimmung der ursprünglichen Eigenschwingungsform der Bremsscheibe erzielt werden. Das ortsfeste reduzierte Widerstandsmoment erzielbar durch die Schlitze wird vorzugsweise mit einem gleichen Abstand zueinander angeordnet und ungleich der Knoten der Eigenschwingungsform ausgelegt, so daß sich bei einer Sechsknotenschwingung beispielsweise eine Schwächung der Bremsscheibe an vier Stellen ergibt.

Ausführungsbeispiele der Erfindung sind in den Zeichnungen dargestellt und werden im folgenden näher beschrieben.

Es zeigen

Fig. 1 eine Bremse mit Bremsscheibe, Reibring und Bremsbelägen in schematischer Darstellung,

Fig. 2 eine innenbelüftete Bremsscheibe mit gleichförmigem Widerstandsmoment dargestellt als Abwicklung über den Umfang der Bremsscheibe,

Fig. 3 die innenbelüftete Bremsscheibe als Abwicklung mit aufgezwungener Schwingungsform mit n-Knoten (sechs Knoten),

Fig. 4 die innenbelüftete Bremsscheibe als Abwicklung mit örtlich reduziertem Widerstandsmomenten W1 bis Wn an x-Stellen,

Fig. 5 die innenbelüftete Bremsscheibe gemäß Fig. 4 mit der verstimmten Eigenschwingungsform, Vs,

Fig. 6 eine Bremsscheibe mit vier Schlitzen im inneren Bremsring,

Fig. 7 eine Bremsscheibe mit vier Schlitzen abwechselnd im äußeren und inneren Bremsring,

Fig. 8 eine Bremse mit gegenüberliegenden Schlitzen im inneren und äußeren Bremsring,

Fig. 9 eine Bremsscheibe mit beispielsweise fünf Schlitzen im inneren Bremsring,

Fig. 10 eine Bremsscheibe mit radialen Teilschlitzen im inneren Bremsring,

Fig. 11 ein Teil der Bremsscheibe mit einem Schlitz im Bremsring auf einer gebogenen Rippe eines Kühlkanals,

Fig. 12 ein Teil der Bremsscheibe mit einem Schlitz im Bremsring auf einer radialen Rippe eines Kühlkanals,

Fig. 13 ein schräg angestellter Schlitz im Bremsring zwischen zwei schräg bzw. gebogen verlaufenden Rippen der Bremsscheibe,

Fig. 14 ein radial verlaufender Schlitz im Bremsring zwischen zwei radial verlaufenden Rippen,

Fig. 15 eine schräg angestellte und die radiale Rippen der Kühlkanäle überkreuzender Schlitz,

Fig. 16 eine schräg angestellte und die bogenförmig schräg verlaufenden Rippen der Kühlkanäle überkreuzender Schlitz,

Fig. 17 eine Ausführung gemäß der Fig. 11 oder 12 mit einem in der Rippe endenden Schlitz,

Fig. 18 eine weitere Ausführung mit einem in einer Doppelrippe endenden Schlitz,

Fig. 19 einen Schnitt durch die Bremsscheibe gemäß der Linie A-A der Fig. 6,

Fig. 20 einen Schnitt durch die Bremsscheibe gemäß der Linie B-B der Fig. 8,

Fig. 21 einen Schnitt durch eine Bremsscheibe mit einer Nut in jeder Reibfläche des Reibringes,

Fig. 22 eine Draufsicht auf eine innenbelüftete Bremsscheibe mit einer im aufgeschnittenen Zustand der Reibfläche dargestellten breiten Rippe mit Schlitz,

Fig. 23 einen Schnitt durch die innenbelüftete Bremsscheibe im Bereich des Schlitzes und

Fig. 24 einen Schnitt durch die Reibfläche der Bremsscheibe mit Anschrägungen des Schlitzes.

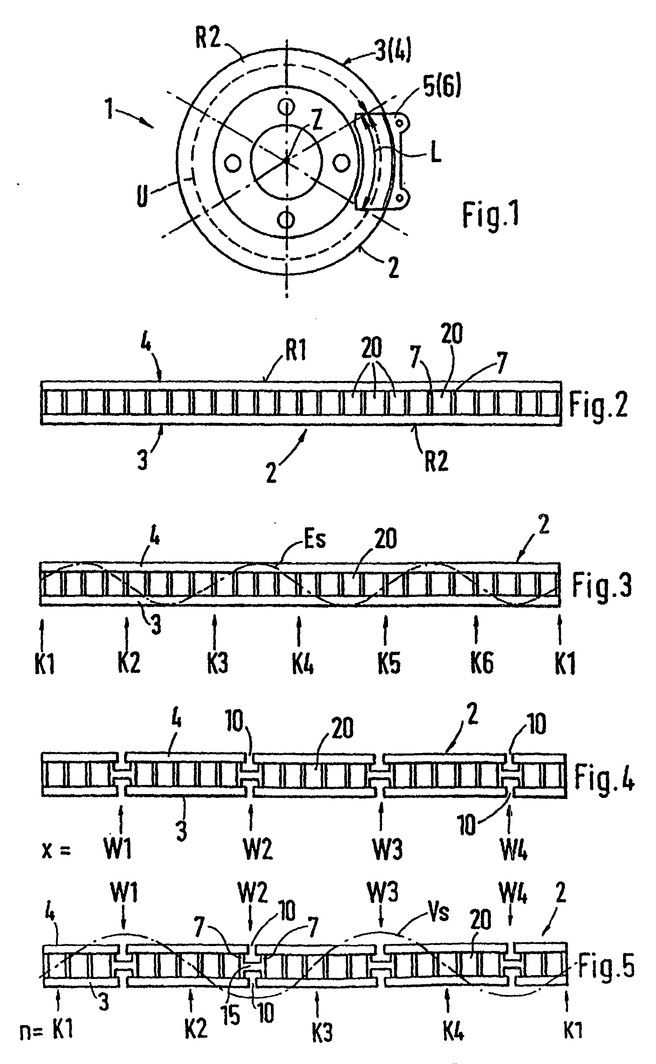

Die Scheibenbremse 1 ist schematisch in Fig. 1 dargestellt und umfaßt im wesentlichen eine innenbelüftete Bremsscheibe 2 mit zwei Reibringen 3, 4, welche außenseitig Reibflächen R1 und R2 aufweisen, die von Bremsbelägen 5, 6 beaufschlagbar sind. Diese sind in einem Bremssattel gehalten und über Bremskolben verschiebbar. Zwischen den beiden Reibringen 3, 4 werden Kühlkanäle 20 zwischen Rippen 7 gebildet, welche die beiden Reibringen 3, 4 miteinander verbinden. In den folgenden Figuren 2 bis 5 ist die Bremsscheibe 2 jeweils als Abwicklung über den Umfang U gezeigt, damit eine Eigenschwingungsform Es, eine verstimmte Schwingungsform Vs sowie die örtlich reduzierten Widerstandsmomente W1 bis Wn, mit den daraus erzielten bestimmten Schwingungsformen der Bremsscheibe 2 darstellbar ist.

Die Eigenschwingungsform Es der Bremsscheibe 2 ist im wesentlichen abhängig von dem Verhältnis des etwa mittleren Bremsscheibenumfangs U zur Bremsbelaglänge L. Das heißt, wenn der Bremsscheibenumfang U z.B. n = 6 mal so groß ist wie die Belaglänge L, so wird der Bremsscheibe eine Eigenschwingungsform Es mit ebenfalls sechs Knoten K1 bis K6 aufgezwungen, wie in Figur 3 näher dargestellt ist.

Damit insbesondere bei bestehenden Bremssystemen, bei denen der Bremsscheibenumfang U sowie die Belaglänge L nicht mehr geändert werden können, einen bezüglich des Geräuschverhaltens (Quietschverhaltens) eine wesentliche Beeinflussung erzielt werden kann, soll eine Verstimmung des Bremssystems hinsichtlich seiner ursprünglichen Eigenschwingungsform Es erreicht werden.

Wenn z.B. bei einem Bremssystem, welches im quietschenden Zustand eine Sechsknotenschwingung "n = 6" beschreibt, das Geräuschverhalten optimiert werden soll, so erfolgt dies durch die Verwendung einer hinsichtlich des Widerstandsmomentes geänderte Bremsscheibe. Diese wird aufgrund ihrer Bauart zu einer anderen Schwingungsform gezwungen, das heißt die örtlichen Widerstandsmomente "x = W1 bis Wn" (Fig. 4) der Bremsscheibe 2 sind ungleich der Knoten "n = K1 bis K6" der Eigenschwingungsform "Es" der Bremsscheibe 2. Hierdurch ist eine Verstimmung des Bremssystems möglich, da das Widerstandsmoment der Bremsscheibe 2 gezielt geschwächt wird, wobei in jedem Fall "x" ungleich "n" ist.

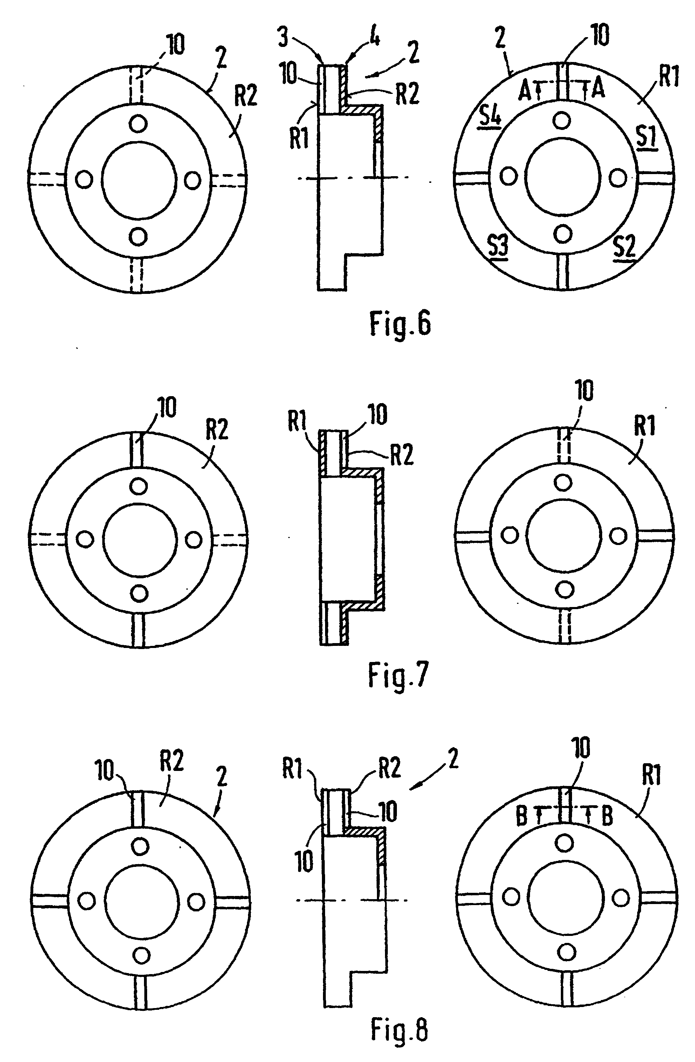

In Fig. 5 ist die Eigenschwingungsform Es einer Bremsscheibe 2 mit örtlich reduziertem Widerstandsmoment W1 bis Wn dargestellt. Die Lage des reduzierten Widerstandsmoments W1 bis Wn in den Reibringen 3, 4 ergibt sich aus der Wahl der Anzahl "x" der örtlich geschwächten Widerstandsmomente W1 bis Wn (z.B. x = 4) wie folgt.

Die örtlich reduzierten Widerstandsmomente W1 bis Wn werden insbesondere durch Schlitze 10 in den Bremsringen 3 und/oder 4 gebildet. Die Schlitze 10 durchtrennen nach einer Ausführung den Bremsring 3 und/oder 4, so daß sich bei "x = 4" vier Teilsegmente S1 bis S4 ergeben.

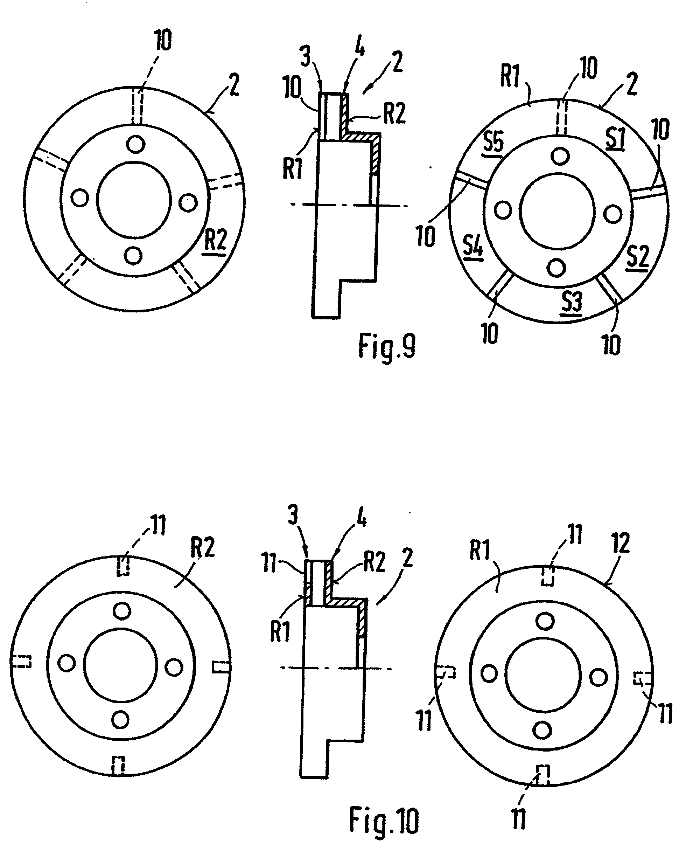

In den Figuren 6 bis 10 sind mehrere Ausführungsbeispiele über die Anordnung der Schlitze 10 dargestellt, wobei entsprechend der Eigenschwingungen für "Es" und der hieraus resultierenden Knoten "K" auch eine entsprechende Anzahl von örtlich reduzierten Widerstandsmomenten "W1 bis Wn" ergeben, wie beispielsweise Fig. 9 mit fünf Segmenten S1 bis S4 zeigt.

Die Schlitze 10 sind gemäß Fig. 6 im inneren Reibring R1, gemäß Fig. 7 abwechselnd im äußeren und inneren Reibring R2, R1, und gemäß Fig. 8 in beiden Reibringen R1 und R2 angeordnet.

Eine gleiche Anordnung gemäß Fig. 6 bis 8 der Schlitze 10 kann auch bei "x = 5" mit fünf Segmenten S1 bis S5 vorgesehen werden.

Nach einer weiteren Ausführung gemäß Fig. 10 ist der innere und/oder der äußere Reibring R1 und R2 mit einem Teilschlitz 11 versehen, der sich vom Außenrand 12 radial nach innen zum Zentrum Z erstreckt und etwa im mittleren Umfang U der Bremsscheibe 2 endet.

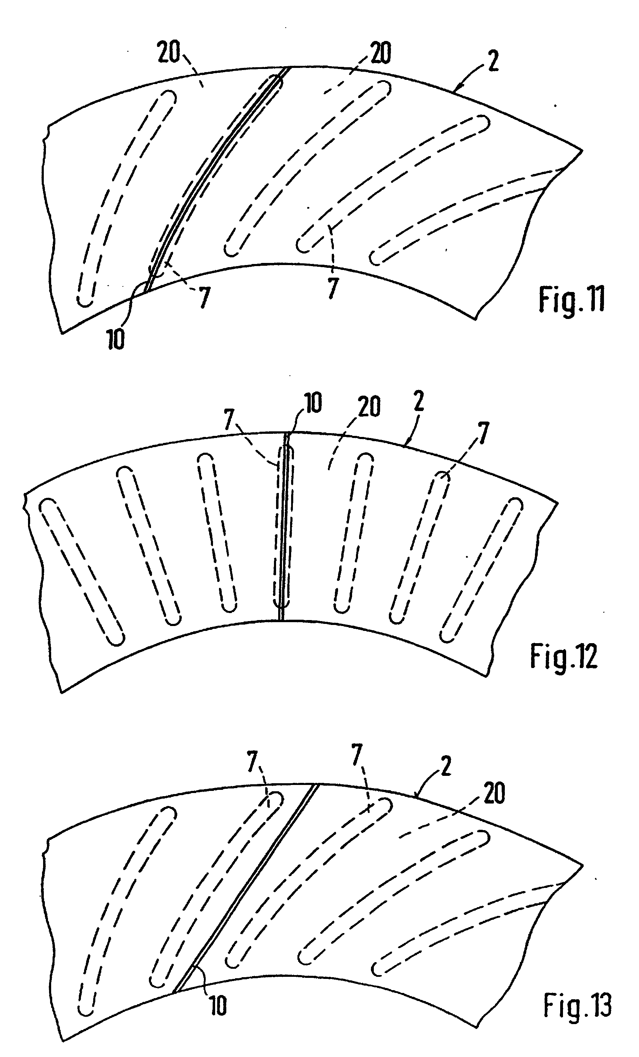

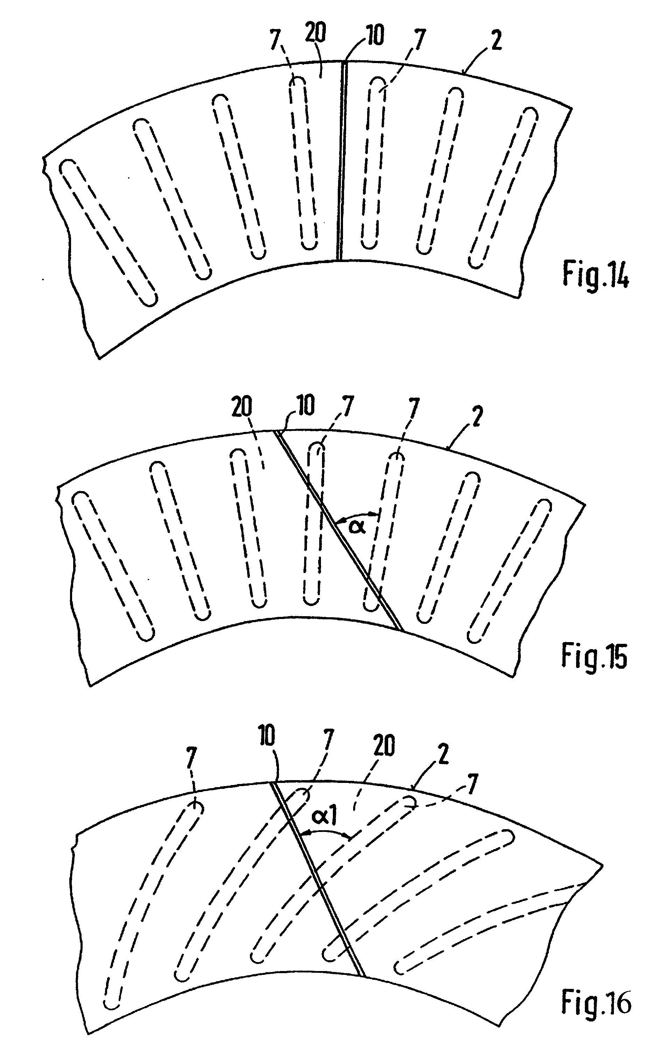

Die Schlitze 10 können gemäß der Fig. 11, 12 unmittelbar auf der Rippe 7 der Kühlkanäle 20 deren Verlauf folgend angeordnet sein oder die Schlitze 10 sind jeweils zwischen den Rippen 7 der Kühlkanäle 20 angeordnet, wie die Fig. 13, 14 zeigen.

Die Schlitze 10 gemäß der Fig. 15, 16 in der Bremsscheibe 2 sind unter einem Winkel $\alpha, \alpha 1$ schräg zu den Rippen 7 angestellt. Die Schlitze 10 können erfindungsgemäß auch entsprechend der Ausführung nach den Fig. 6 bis 10 angeordnet werden.

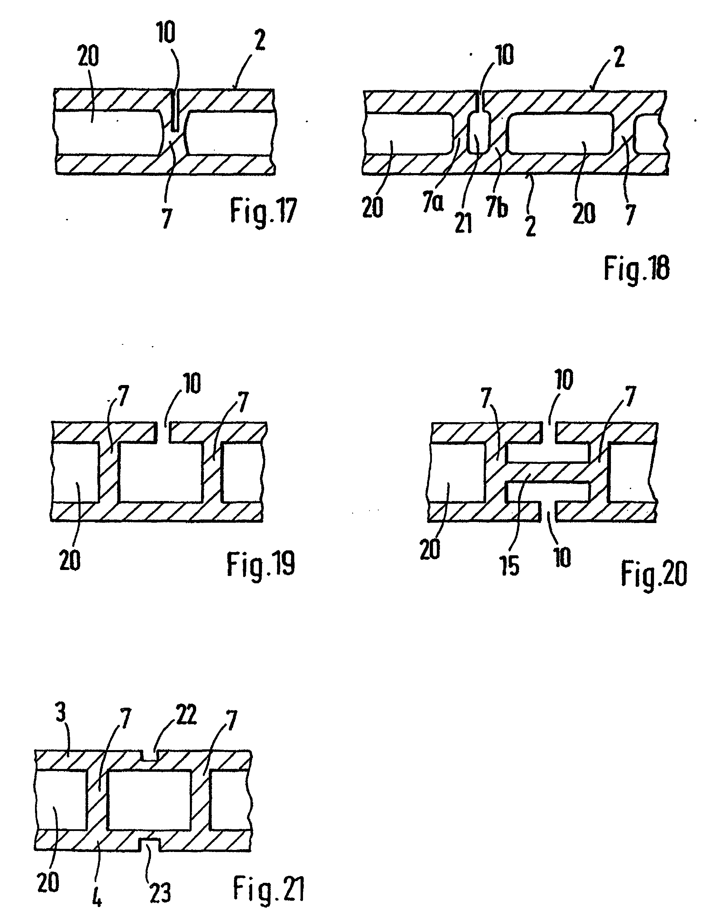

Bei einer Anordnung des Schlitzes 10 auf mindestens einer der Rippen 7 der Bremsscheibe 2 kann diese entweder durchgehend sein oder mittig der Rippe 7 enden, wie Fig. 17 näher zeigt. Eine solche Anordnung der Schlitze 10 ist beispielsweise abwechselnd im äußeren und inneren Reibring R2 und R1 möglich.

Nach einer weiteren Ausführung der Erfindung gemäß Fig. 18 ist der Schlitz 10 zwischen zwei Rippen 7 und 7b angeordnet, die unmittelbar benachbart sind und zwischen sich einen weiteren Kühlkanal 21 zu den vorhandenen Kühlkanälen 20 zwischen den Rippen 7 der Bremsscheibe 2 bilden.

Bei einer Anordnung der Schlitze 10 gemäß Fig. 8 mit gegenüberliegenden Schlitzen in den Reibringen 3 und 4 sind die Rippen 7 über mindestens einen Quersteg 15 miteinander verbunden, wie in Fig. 5 näher dargestellt ist.

Gemäß der Ausführung Fig. 21 wird ein verringerter örtlicher Widerstandsmoment durch Nuten 22 in den Reibflächen R1 und R2 in den Bremsringen erzielt, die sich vom Zentrum Z bis zum Außenrand 12 erstrecken.

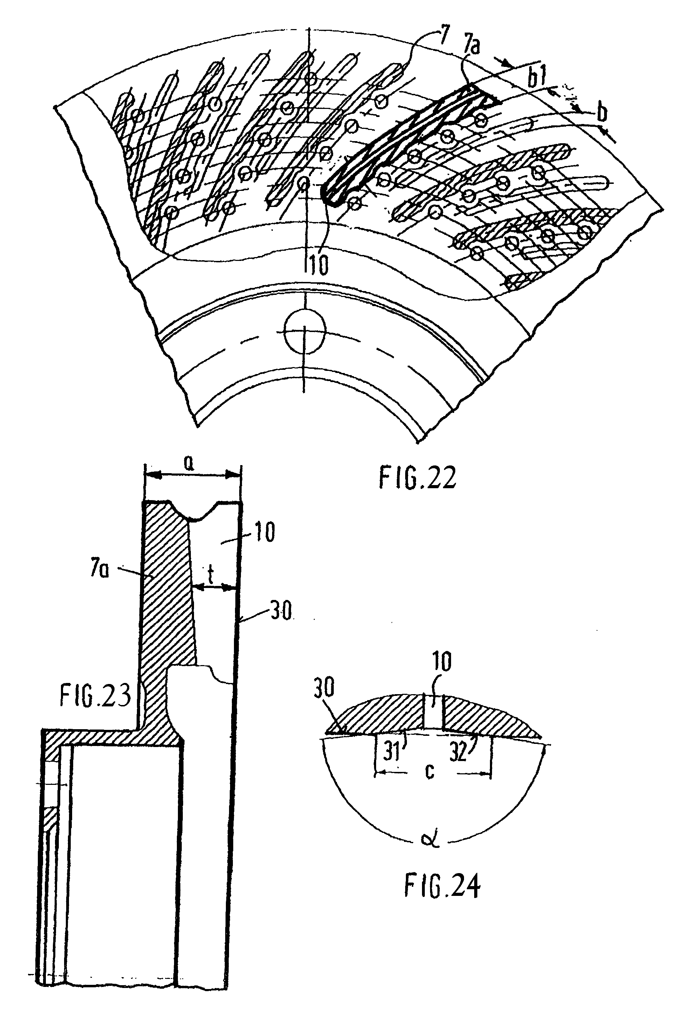

Wie in den Figuren 11 und 12 näher dargestellt, ist der Schlitz 10 etwa mittig der Rippe 7 angeordnet. Die Rippen 7 sind in dieser Ausführung alle von gleicher Breite b. Damit durch den Schlitz 10 keine Schwächung der Rippe eintritt, wird nach einer weiteren Ausführung gemäß der Figuren 22 bis 24 eine gegenüber der Rippe 7 breitere Rippe 7a mit dem Maß b1 vorgesehen, in welcher der Schlitz 10 angeordnet ist. Der Schlitz 10 weist vorzugsweise eine Breite von < 2 mm, insbesondere von 1,4 mm auf, wobei die Tiefe t des Schlitzes 10 etwa bis zur Hälfte der Bremsscheibendicke a erfolgt. Der Schlitz 10 ist an der Reibringfläche 30 zu beiden Seiten mit einer Anschrägung 31, 32 mit einer Breite c und einem Winkel $\alpha$ vorgesehen. Der Schlitz 10 kann an der Außenreibringfläche und/oder an einer Innenreibringfläche angeordnet sein. Es sind vorzugsweise fünf breitere Rippen 7a vorgesehen, die gleichmäßig über den Umfang verteilt angeordnet sind.

**Patentansprüche**

1. Verfahren zur Auslegung einer Scheibenbremse, bei der die Bremsbeläge (5, 6) eine im Verhältnis zum etwa mittleren Umfang der Bremsscheibe (u) stehenden Teilumfangslänge (L) aufweisen und sich eine aufgezwungene Eigenschwingungsform (Es) der Bremsscheibe mit n Knoten ergibt und in den Reibringen (3, 4) Schlitze (10) vorgesehen sind, **dadurch gekennzeichnet, dass** die Reibringe (3, 4) der Bremsscheibe (2) in mindestens einem Flächenbereich der Reibfläche (R1) und/oder (R2) eine örtliche Schwächung des Widerstandsmoments (W1 bis Wn) derart aufweist, dass eine verstimmende Knoten-Schwingung (Vs) erzielbar ist, die ungleich der Eigenschwingungsform (Es) der Bremsscheibe (2) mit den Knoten (n) gebildet aus dem Verhältnis

$$n = \frac{u \; (mittlerer \; Bremsscheibenumfang)}{L \; (Bremsbelaglänge)}$$

ist.

**2.** Verfahren nach Anspruch 1, **dadurch gekennzeichnet, dass** die örtliche Schwächung des Widerstandsmoments (W1 bis Wn) in den Reibringen (3, 4) der Bremsscheibe (2) aus einem oder mehreren Schlitzen (10; 11) bestehen, welche den Reibring (3) und/oder (4) auftrennen und die sich vom Innenrand der Reibringe (3, 4) bis zum Außenrand (12) der Reibringe (3, 4) erstrecken.

**3.** Verfahren nach den Ansprüchen 1 oder 2, **dadurch gekennzeichnet, dass** die Schlitze (10) jeweils zwischen Rippen (7) der Kühlkanäle (20) der Bremsscheibe (2) angeordnet sind.

**4.** Verfahren nach einem der Ansprüche 1 bis 3, **dadurch gekennzeichnet, dass** die Schlitze (10) jeweils auf den Rippen (7; 7a) der Kühlkanäle 20 verlaufend angeordnet sind und die Reibflächen (R1, R2) der Reibringe (3, 4) durchdringen und in den Rippen (7; 7a) enden.

**5.** Verfahren nach Anspruch 4, **dadurch gekennzeichnet, dass** mindestens eine Rippe (7a) des Kühlkanals (20) eine größere Breite (b1) aufweist als die weiteren Rippen (7) mit der Breite (b) und in diese Rippen (7a) größerer Breite (b1) der Schlitz (10) vorgesehen ist, der dem Rippenverlauf folgend den Reibring durchdringt.

**6.** Verfahren nach den Ansprüchen 4 oder 5, **dadurch gekennzeichnet, dass** der Schlitz (10) eine Breite (b1) von < 2 mm aufweist und eine Tiefe (t) von etwa bis zur Hälfte der Bremsscheibendicke (a) besitzt.

**7.** Verfahren nach den Ansprüchen 4, 5 oder 6, **dadurch gekennzeichnet, dass** der Schlitz (10) an der Oberfläche (30) des Reibringes an beiden Seiten eine Anschrägung (31, 32) mit der Breite (c) und dem Winkel () aufweist.

**8.** Verfahren nach den Ansprüchen 4, 5, 6 oder 7, **dadurch gekennzeichnet, dass** der Schlitz (10) in der Rippe (7a) größerer Breite (b1) an der Innen- und/oder Außenseite der Bremsscheibe angeordnet ist.

**9.** Verfahren nach den Ansprüchen 4, 5, 6, 7 oder 8, **dadurch gekennzeichnet, dass** mindestens fünf Rippen (7a) mit der Breite (b1) über den Umfang der Bremsscheibe gleichmäßig verteilt angeordnet sind.

**10.** Verfahren nach den Ansprüchen 1 oder 2, **dadurch gekennzeichnet, dass** die Schlitze (10) unter einem Winkel ( oder 1) schräg verlaufend zu den Rippen (7) der Kühlkanäle (20) in den Reibringen (3, 4) angeordnet sind.

**11.** Verfahren nach den Ansprüchen 1 oder 2, **dadurch gekennzeichnet, dass** ein oder mehrere Schlitze (10) sowohl im äußeren als auch im inneren Reibring (3, 4) verteilt angeordnet sind.

**12.** Verfahren nach den Ansprüchen 1, 2 oder 10, **dadurch gekennzeichnet, dass** ein oder mehrere Schlitze (10) nur im inneren Reibring (3) verteilt angeordnet sind.

**13.** Verfahren nach den Ansprüchen 1 oder 2, **dadurch gekennzeichnet, dass** ein oder mehrere Schlitze (10) nur im äußeren Reibring (4) verteilt angeordnet sind.

**14.** Verfahren nach den Ansprüchen 1 oder 2, **dadurch gekennzeichnet, dass** die Schlitze (10) abwechselnd im inneren und äußeren Reibring (3) und (4) der Bremsscheibe (2) angeordnet sind.

**15.** Verfahren nach einem oder mehreren der vorhergehenden Ansprüche, **dadurch gekennzeichnet, dass** die Schlitze (10) jeweils zwischen zwei unmittelbar benachbarten Doppelrippen (7a, 7b) der Reibringe (3, 4) angeordnet sind und im Abstand zu diesen Doppelrippen (7a, 7b) jeweils zu beiden Seiten eine Einzelrippe (7) der Kühlkanäle (20) angeordnet ist.

**16.** Verfahren nach einem oder mehreren der vorhergehenden Ansprüche, **dadurch gekennzeichnet, dass** in den Reibflächen (R1) und (R2) der Reibringe (3, 4) jeweils gegenüberliegende Schlitze (10) angeordnet sind und die unmittelbar benachbart zu diesen Schlitzen (10) angeordnete Rippe (7) zwischen den Reibringen (3, 4) über einen Quersteg (15) miteinander verbunden sind.

**17.** Verfahren nach einem oder mehreren der vorhergehenden Ansprüche, **dadurch gekennzeichnet, dass** zumindest der innere Reibring (3) Teilschlitze aufweist, die sich radial oder schräg vom Außenrand (12) Bremsscheibe (2) nach innen zum Zentrum (Z) hin erstrecken.

**18.** Verfahren nach den Ansprüchen 1 oder 2, **dadurch gekennzeichnet, dass** in den Reibflächen (R1) und/oder (R2) zumindestens eine Nut (22, 23) angeordnet ist, die sich vom Innenrand zum Außenrand (12) der Bremsscheibe (2) erstreckt.

**Claims**

**1.** A method of designing a disc brake, in which the brake pads (5, 6) have a partial peripheral length (**L**) in a relationship to the substantially average periphery of the brake disc (**u**) and a forcible natural-oscillation shape (**Es**) of the brake disc with **n** nodes is produced and slots (10) are provided in the friction rings (3, 4), **characterized in that** the friction rings (3, 4) of the brake disc (2) in at least one region of the friction face (**R1**) and/or (**R2**) has a local weakening of the resistance moment (**W1** to **Wn**), in such a way that a de-tuning node oscillation (**Vs**) can be achieved which is formed from the relationship

$$n = \frac{u \ (average \ periphery \ of \ the \ brake \ disc)}{L \ (length \ of \ the \ brake \ pad)}$$

so as to be unequal to the natural-oscillation shape (**Es**) of the brake disc (2) with the nodes (**n**).

2. A method according to Claim 1, **characterized in that** the local weakening of the resistance moment (**W1** to **Wn**) in the friction rings (3, 4) of the brake disc (2) comprises one or more slots (10; 11) which separate the friction ring (3) and/or (4) and which extend from the inner edge of the friction rings (3, 4) as far as the outer edge (12) of the friction rings (3, 4).

3. A method according to Claim 1 or 2, **characterized in that** the slots (10) are arranged between ribs (7) of the cooling ducts (20) of the brake disc (2) in each case.

4. A method according to one of Claims 1 to 3, **characterized in that** the slots (10) are arranged extending on the ribs (7; 7a) of the cooling ducts 20 in each case, and pass through the friction faces (**R1, R2**) of the friction rings (3, 4) and terminate in the ribs (7; 7a).

5. A method according to Claim 4, **characterized in that** at least one rib (**7a**) of the cooling duct (20) has a greater width (**b1**) than the further ribs (7) with the width (**b**) and the slot (10), which passes through the friction ring so as to follow the pattern of the ribs, is provided in the said ribs (7a) of greater width (**b1**).

6. A method according to Claim 4 or 5, **characterized in that** the slot (10) has a width (**b1**) of < 2 mm and a depth (**t**) of substantially up to half the brake-disc thickness (**a**).

7. A method according to Claim 4, 5 or 6, **characterized in that** the slot (10) on the surface (30) of the friction ring has a bevelled portion (31, 32) with the width (**c**) and the angle (α) on both sides.

8. A method according to Claim 4, 5, 6 or 7, **characterized in that** the slot (10) in the rib (7a) of greater width (**b1**) is arranged on the inside and/or outside of the brake disc.

9. A method according to Claim 4, 5, 6, 7 or 8, **characterized in that** at least five ribs (7a) with the width (**b1**) are arranged uniformly distributed over the periphery of the brake disc.

10. A method according to Claim 1 or 2, **characterized in that** the slots (10) are arranged in the friction rings (3, 4) so as to extend obliquely at an angle (α or α**1**) to the ribs (7) of the cooling ducts (20).

11. A method according to Claim 1 or 2, **characterized in that** one or more slots (10) are arranged distributed both in the outer friction ring and in the inner friction ring (3, 4).

12. A method according to Claim 1, 2 or 10, **characterized in that** one or more slots (10) are arranged distributed only in the inner friction ring (3).

13. A method according to Claim 1 or 2, **characterized in that** one or more slots (10) are arranged distributed only in the outer friction ring (4).

14. A method according to Claim 1 or 2, **characterized in that** the slots (10) are arranged alternately in the inner and in the outer friction ring (3) and (4) of the brake disc (2).

15. A method according to one or more of the preceding Claims, **characterized in that** the slots (10) are arranged in each case between two directly adjacent double ribs (7a, 7b) of the friction rings (3, 4) and a respective individual rib (7) of the cooling ducts (20) is arranged on both sides in each case at a distance from the said double ribs (7a, 7b).

16. A method according to one or more of the preceding Claims, **characterized in that** opposed slots (10) are arranged in each case in the friction faces (**R1**) and (**R2**) of the friction rings (3, 4) and the ribs (7) - arranged directly adjacent to the said slots (10) - between the friction rings (3, 4) are connected to each other by way of a transverse web (15).

17. A method according to one or more of the preceding Claims, **characterized in that** at least the inner friction ring (3) has partial slots which extend radially or obliquely inwards from the outer edge (12) of the brake disc (2) towards the centre (**Z**).

18. A method according to Claim 1 or 2, **characterized in that** at least one groove (22, 23), which extends from the inner edge to the outer edge (12) of the brake disc (2), is arranged in the friction faces (**R1**) and/or (**R2**).

**Revendications**

1. Procédé pour la conception d'un frein à disque dans le cas duquel les garnitures de frein (5, 6) ont une longueur périphérique partielle (L) qui est en rapport avec le pourtour approximativement médian du disque de frein (u), une forme d'oscillation propre imposée (Es) du disque de frein avec n noeuds est obtenue et des fentes (10) sont prévus dans les bagues de friction (3, 4), **caractérisé en ce que** les bagues de friction (3, 4) du disque de frein (2) comprennent dans au moins une zone de surface de la surface de friction (R1) et/ou (R2) un point local de fragilisation du couple résistant (W1 à Wn) tel qu'il soit possible d'obtenir une oscillation nodale désaccordée (Vs), qui est différente de la forme d'oscillation propre (Es) du disque de frein (2) avec les noeuds (n) formés par le rapport

$$n = \frac{u(\text{pourtour médian de disque de frein})}{L(\text{longueur de garniture de frein}}$$

2. Procédé selon la revendication 1, **caractérisé en ce que** le point local de fragilisation du couple résistant (W1 à Wn) dans les bagues de friction (3, 4) du disque de frein (2) se compose d'une ou de plusieurs fentes (10, 11), qui séparent la bague de friction (3) et/ou (4) et qui s'étendent depuis le bord intérieur des bagues de friction (3, 4) jusqu'au bord extérieur (12) des bagues de friction (3, 4).

3. Procédé selon les revendications 1 ou 2, **caractérisé en ce que** les fentes (10) sont disposées respectivement entre des nervures (7) des canaux de refroidissement (20) du disque de frein (2).

4. Procédé selon l'une quelconque des revendications 1 à 3, **caractérisé en ce que** les fentes (10) sont disposées en s'étendant respectivement sur les nervures (7 ; 7a) des canaux de refroidissement (20), traversent les surfaces de frottement (R1, R2) des bagues de friction (3, 4) et se terminent dans les nervures (7 ; 7a).

5. Procédé selon la revendication 4, **caractérisé en ce qu'**au moins une nervure (7a) du canal de refroidissement (20) présente une largeur (b1) plus importante que les autres nervures (7) ayant la largeur (b) et **en ce que** dans ces nervures (7a) de largeur (b1) plus importante est prévue la fente (10) qui, en suivant le cheminement de la nervure, traverse la bague de friction.

6. Procédé selon les revendications 4 ou 5, **caractérisé en ce que** la fente (10) à une largeur (b1) < 2 mm et a une profondeur (t) allant environ jusqu'à la moitié de l'épaisseur (a) du disque de frein.

7. Procédé selon les revendications 4, 5 ou 6, **caractérisé en ce que** sur la surface (30) de la bague de friction, la fente (10) comprend sur les deux côtés un chanfrein (31, 32) ayant une largeur (c) et un angle ($\alpha$).

8. Procédé selon les revendications 4, 5, 6 ou 7, **caractérisé en ce que** la fente (10) est disposée dans la nervure (7a) de largeur plus importante (b1) sur le côté intérieur et/ou extérieur du disque de frein.

9. Procédé selon les revendications 4, 5, 6, 7 ou 8, **caractérisé en ce qu'**au moins cinq nervures (7a) ayant la largeur (b1) sont disposées avec une répartition uniforme sur le pourtour du disque de frein.

10. Procédé selon les revendications 1 ou 2, **caractérisé en ce que** les fentes (10) sont disposées sur les bagues de friction (3, 4) avec un angle ( ou 1) en s'étendant en biais par rapport aux nervures (7) des canaux de refroidissement (20).

11. Procédé selon les revendications 1 ou 2, **caractérisé en ce qu'**une ou plusieurs fente(s) (10) est (sont) disposée(s) en étant répartie(s) aussi bien dans la bague de friction extérieure que dans la bague de friction intérieure (3, 4).

12. Procédé selon les revendications 1, 2 ou 10, **caractérisé en ce qu'**une ou plusieurs fente(s) (10) n'est (ne sont) disposée(s) en étant répartie(s) que dans la bague de friction intérieure (3).

13. Procédé selon les revendications 1 ou 2, **caractérisé en ce qu'**une ou plusieurs fente(s) (10) n'est (ne sont) disposée(s) en étant répartie(s) que dans la bague de friction extérieure (4).

14. Procédé selon les revendications 1 ou 2, **caractérisé en ce que** les fentes (10) sont disposées en alternance dans la bague de friction intérieure (3) et dans la bague de friction extérieure (4) du disque de frein (2).

15. Procédé selon l'une quelconque ou plusieurs des revendications précédentes, **caractérisé en ce que** les fentes (10) sont disposées respectivement entre deux nervures doubles (7a, 7b) immédiatement voisines l'une de l'autre des bagues de friction (3, 4) et **en ce qu'**une nervure individuelle (7) des canaux de refroidissement (20) est disposée respectivement des deux côtés avec un espacement par rapport à ces nervures doubles (7a, 7b).

16. Procédé selon l'une quelconque ou plusieurs des revendications précédentes, **caractérisé en ce que** sur les surfaces de friction (R1) et (R2) des bagues de friction (3, 4) sont disposées des fentes (10) qui sont respectivement opposées l'une à l'autre et **en ce que** les nervures (7) entre les bagues de friction (3, 4) qui sont disposées dans le voisinage direct de ces fentes (10) sont reliées entre elles par une nervure transversale (15).

17. Procédé selon l'une quelconque ou plusieurs des revendications précédentes, **caractérisé en ce qu'**au moins la bague de friction intérieure (3) est munie de fentes partielles, qui s'étendent dans le sens radial ou transversal depuis le bord extérieur (12) du disque de frein (2) vers l'intérieur jusqu'au centre (Z).

18. Procédé selon les revendications 1 ou 2, **caractérisé en ce que** dans les surfaces de friction (R1) et/ou (R2) est disposée au moins une rainure (22, 23) qui s'étend depuis le bord intérieur jusqu'au bord extérieur (12) du disque de frein (2).

Fig.1

Fig.2

Fig.3

K1   K2   K3   K4   K5   K6   K1

Fig.4

x =   W1   W2   W3   W4

Fig.5

W1   W2   W3   W4

n= K1   K2   15   K3   K4   K1

EP 1 048 872 B1

Fig.6

Fig.7

Fig.8

Fig.9

Fig.10

Fig.11

Fig.12

Fig.13

Fig.14

Fig.15

Fig.16

Fig.17

Fig.18

Fig.19

Fig.20

Fig.21

FIG.22

FIG.23

FIG.24